# EUROPEAN PATENT APPLICATION

(11) **EP 2 997 816 A1**
(43) Date of publication of application: **23.03.2016**
(21) Application number: 15186118.4
(22) Date of filing: 21.09.2015
(51) Int. Cl.: A01F 25/20

(54) **APPARATUS FOR LOADING FIBROUS PRODUCTS WITH IMPROVED CAB ACCESS SYSTEM**

(30) Priority: 22.09.2014 IT MI20140283 U
(71) Applicant: OFFICINE SGARIBOLDI S.n.c. di Sgariboldi Giuseppe & C., 26845 CODOGNO, (LO) (IT)
(72) Inventor: SGARIBOLDI, Giuseppe, 26823 Camairago (LO) (IT)
(74) Representative: Ottazzo, Marco Francesco Agostino

(57) **Abstract**

An apparatus (100) for loading fibrous products is described comprising at least one motorised desilaging device (102), operatively connected to a self-propelled means (101), at least one conveyor belt, at least one container (103), fixed onto a frame (104) of the self-propelled means (101), and a driving cabin (105) that allows an operator to control the self-propelled means (101) and all the devices mounted on board the apparatus (100). The motorised desilaging device (102) is configured for loading the fibrous products onto the conveyor belt. The conveyor belt is configured for conveying the fibrous products towards the container (103). The apparatus (100) comprises at least one access device (108) hinged to the frame (104) at the driving cabin (105). The access device (108) is provided with an actuation means (109) capable of moving the access device (108) between a first operative configuration, in which the access device (108) is in an opened out position, so as to be able to be used by the operator to get in and out of the driving cabin (105), and a second operative configuration, in which the access device (108) is in a closed up position, so as not to hinder the moving operations of the self-propelled means (101) and/or the actuation of the mobile devices mounted on board the apparatus (100).

## Description

The present invention refers to an apparatus for loading fibrous products, in particular fibrous products for animal farming.

It is known that in animal farming it is often necessary to carry out the advance cutting and mixing of fibrous products, like for example hay, straw, cereals, plants, fruit, vegetables and tuberous plants, intended for feeding for example bovines. These operations are generally carried out through cutter-mixers, which mix the fibrous products possibly carrying out prior shredding.

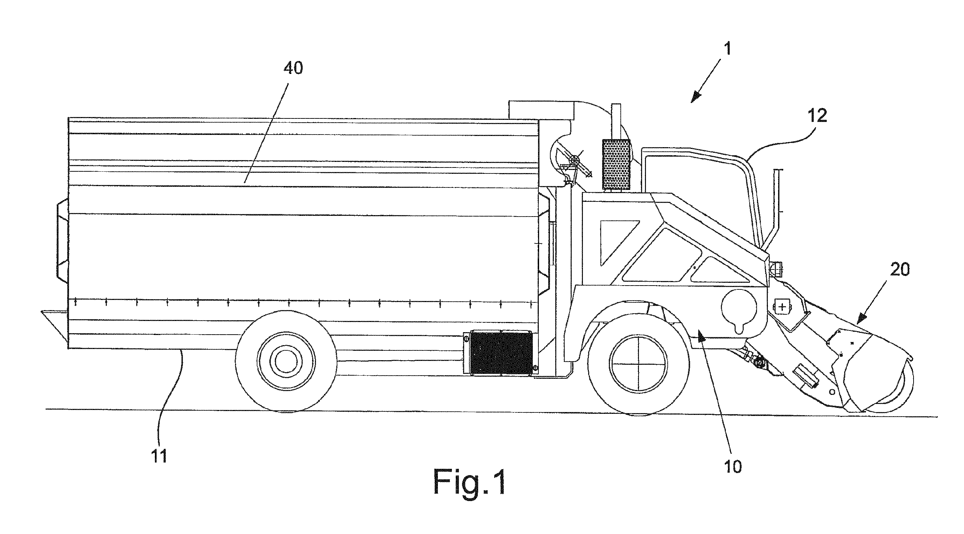

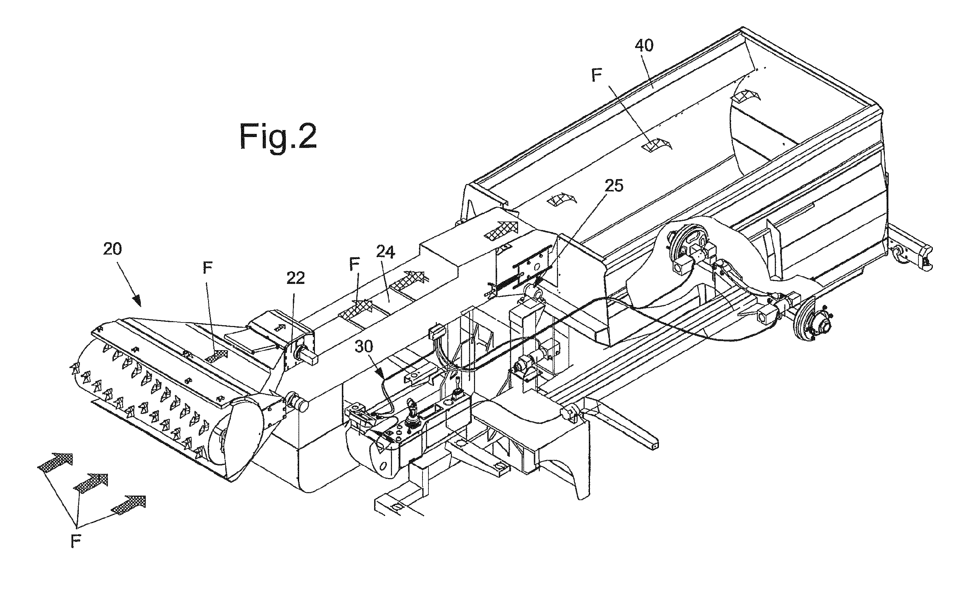

An example of the aforementioned cutter-mixers is known from document EP 1 449 426 B1, filed in the name of the same Applicant, which will be described briefly hereafter with the help of figures 1 and 2 of the prior art. As can be seen in figures 1 and 2 of the prior art, the known cutter-mixer 1 comprises a self-propelled means 10 on the front portion of which a desilaging device 20 is engaged in an oscillating manner, provided with a conveyor 24 configured for loading the fibrous products to be mixed inside a container 40. The container 40 is mounted on the frame 11 of the self-propelled means 10 and is configured to carry out the mixing of the fibrous products inside it. An electronic weighing system 30 is operatively connected to a drive mechanism group 25 and is configured for varying the speed of the conveyor 24 as a function of the weight and type of fibrous products loaded, so as to send the fibrous products in defined points of the container 40 as shown by the arrows F in figure 2.

The self-propelled means 10 is typically equipped with a driving cabin 12 from where the self-propelled means 10 itself is controlled, as well as with a drive group suitable housed on the frame 11. Access to the driving cabin 12 can be ensured by a fixed platform, integral with the frame 11 or with the driving cabin 12 itself. According to the load conditions of the container 40 and/or to the operative position of the desilaging device 20, however, the platform can be in an awkward position for the operator, or it can even constitute an obstacle for the manoeuvres of the self-propelled means 10 and/or of the relative desilaging device. The absence of any access platform to the driving cabin 12, on the other hand, would force the operator to carry out complex and tiring movements to get in and out of the driving cabin 12 itself and would expose him/her to the risk of falling.

The purpose of the present invention is therefore to avoid the aforementioned drawbacks and, in particular, to devise an apparatus for loading fibrous products with improved access system that is capable of ensuring safe and easy access to the cabin for the operator.

This and other purposes according to the present invention are accomplished by making an apparatus for loading fibrous products as outlined in claim 1.

Further characteristics of the invention are highlighted by the dependent claims, which are an integral part of the present description.

The characteristics and advantages of an apparatus for loading fibrous products according to the present invention will become clearer from the following description, given as a non-limiting example, referring to the attached schematic drawings, in which:
figure 1 is a schematic side view of an embodiment of a cutter-mixer according to the prior art;
figure 2 is a schematic perspective view of an embodiment of a cutter-mixer according to the prior art;
figure 3 is a side view of an apparatus for loading fibrous products according to the present invention;
figure 4 is a front view of the apparatus for loading fibrous products of figure 3;
figure 5 is a partial perspective view of the apparatus for loading fibrous products of figure 3;
figure 6 is a perspective view of a preferred embodiment of the access system into the cabin of the apparatus for loading fibrous products of figure 3;
figure 7 is a front view of the access system into the cabin of figure 6;
figure 8 is a side view of the access system into the cabin of figure 6; and
figure 9 is a top view of the access system into the cabin of figure 6.

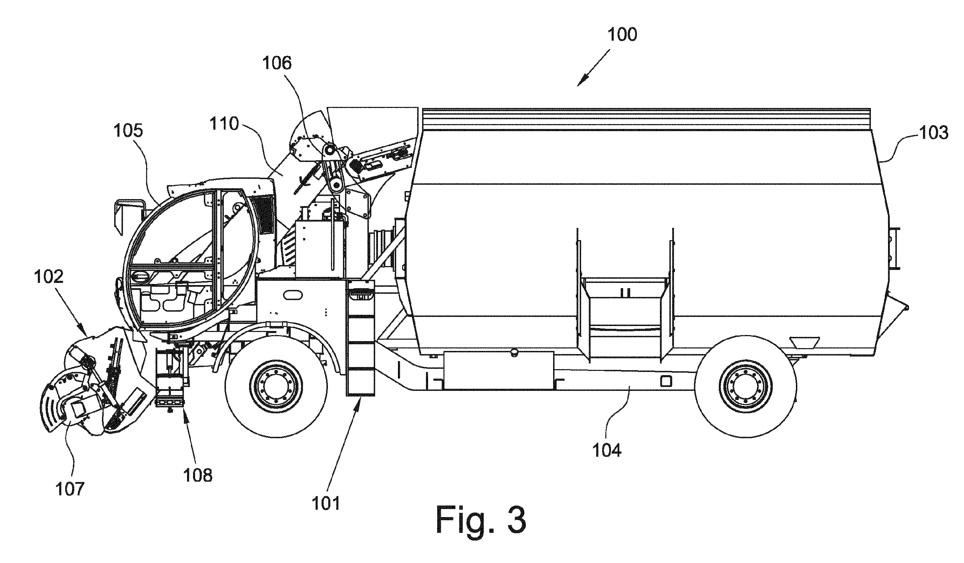

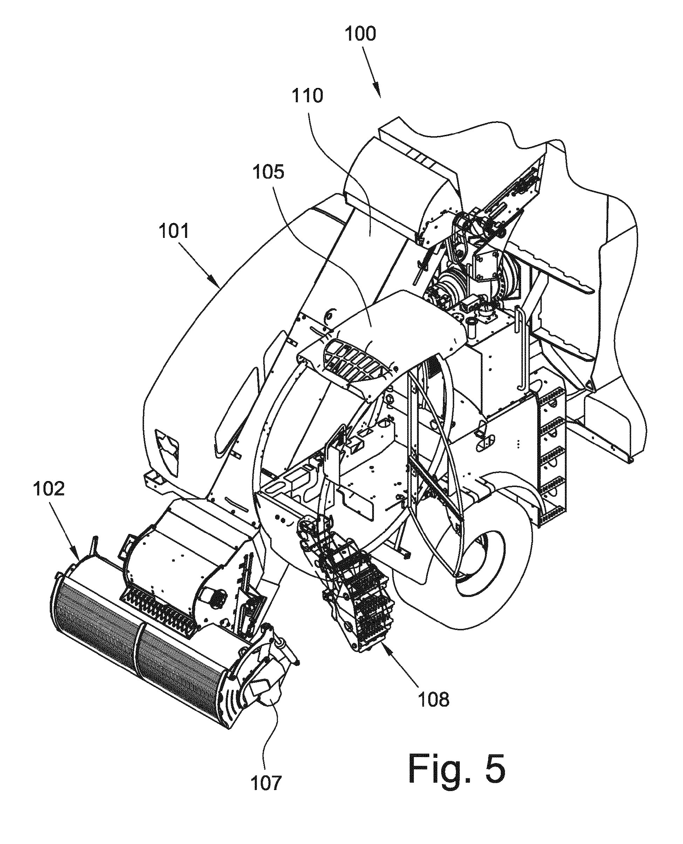

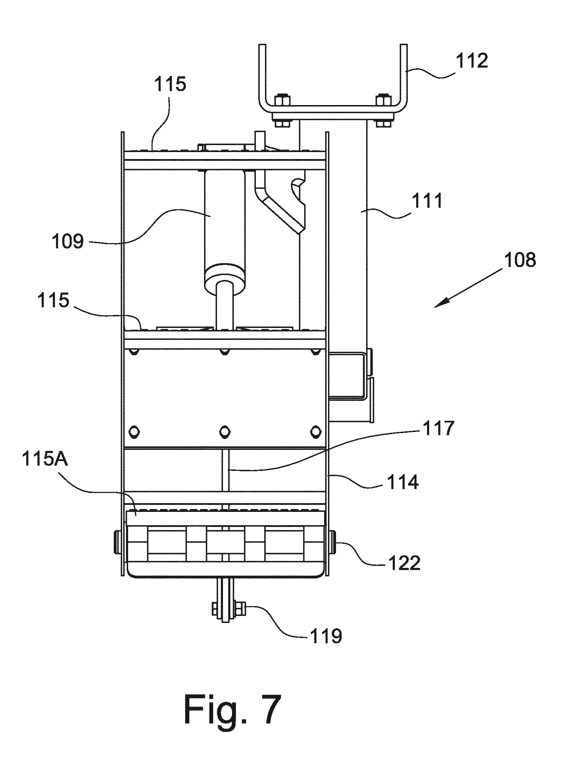

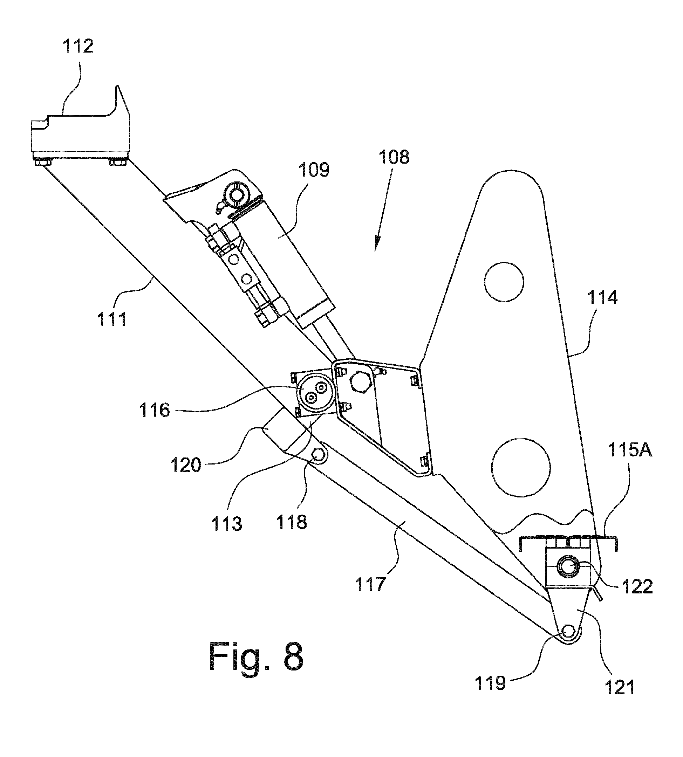

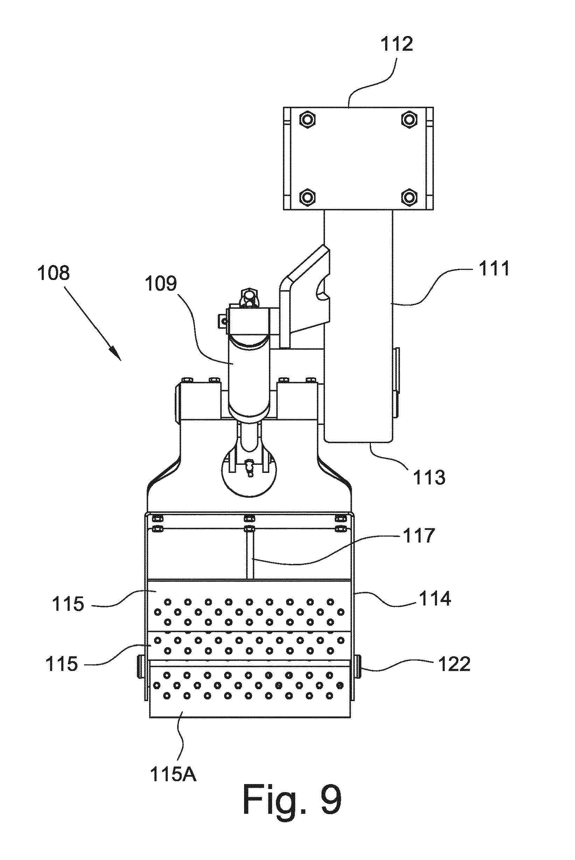

With reference in particular to figures 3 to 9, an apparatus for loading fibrous products according to the present invention is shown, wholly indicated with reference numeral 100. The apparatus 100 comprises at least one motorised desilaging device 102 configured to collect a predetermined amount of fibrous products from the ground or from a similar support surface. The support surface can, for example, consist of a raised plane, which can be raised from the ground up to the maximum height able to be reached by the motorised desilaging device 102.

Advantageously, the motorised desilaging device 102 is provided with a box-like body 110, having a substantially tubular configuration, preferably polyhedron-shaped, the profile of which in section can vary as a function of the requirements and the contingent constructive choices. For the purposes of the present invention, the box-like body 110 can also have one or more upper openings, or be completely open on top.

Preferably, the motorised desilaging device 102 is provided with at least one picker 107, or a similar collection member, the actuation of which allows the fibrous products to be picked up from the ground, or from a raised plane and allows the same fibrous products to be deposited in the box-like body 110. The apparatus 100 also comprises at least one conveyor belt (not illustrated) that preferably lies inside the aforementioned box-like body 110 to receive the fibrous products collected and to convey them from the place of collection along a respective predetermined advancing direction.

In detail, the conveyor belt configured for conveying the aforementioned fibrous products can be actuated and controlled through a moving group (not illustrated) and through suitable motion transmission means (also not illustrated). In accordance with a preferred solution of the present invention, the conveyor belt can comprise a motorised shredder (not illustrated), advantageously a blade mill, configured to carry out prior shredding of the fibrous products if they have long fibres.

The motorised desilaging device 102 is advantageously rotatable about a substantially horizontal rotation axis between a first operative position, in which the picker 107, carried by it, is at the ground, and a second operative position, in which the picker 107 is raised with respect to the first operative position. The rotation of the motorised desilaging device 102 between the first operative position and the second operative position allows the movement of the picker 107 height-wise, so that it is possible to collect fibrous products even arranged on surfaces that are raised with respect to the ground.

The rotation of the motorised desilaging device 102 is made possible by the hinging thereof to a suitable self-propelled means 101, also forming part of the apparatus 100, like for example a truck, a tractor or a tracked vehicle. As can be seen in figure 3, the motorised desilaging device 102 is hinged to a pair of arms 106 that extend from the self-propelled means 101 at a front area thereof. Again with reference to figure 3, the apparatus 100 comprises at least one container 103, suitably fixed onto the frame 104 of the self-propelled means 101 at a rear area thereof to receive and contain the fibrous products collected and loaded by the motorised desilaging device 102. The container 103 advantageously comprises at least one mixer (not illustrated), like for example a paddle reel, moved by the driving unit of the self-propelled means 101, to carry out the mixing of the fibrous products contained therein.

The apparatus 100 also comprises a driving cabin 105, which allows an operator to control the self-propelled means 101 and all of the devices mounted on board the apparatus 100, as well as a drive group (not illustrated), suitably housed on the frame 104 and capable both of moving the self-propelled means 101, and of actuating the mobile devices mounted on board the apparatus 100. The apparatus 100 can also comprise a weighing system (not illustrated), preferably electronic, operatively connected to the moving group of the conveyor belt, to control the conveying speed of the fibrous products loaded onto the conveyor belt and conveyed towards the container 103.

The operation of the apparatus 100 is as follows. The operator in the driving cabin 105 drives the self-propelled means 101 towards a pile of fibrous products and adjusts the inclination of the motorised desilaging device 102 according to the height from the ground of the pile of fibrous products. As soon as the motorised desilaging device 102 comes into contact with the pile of fibrous products, the picker 107 loads them onto the conveyor belt, which conveys them towards the container 103. If necessary, in the case of long-fibre fibrous products, the motorised chopper is actuated and carries out prior shredding of the fibrous products. The fibrous products end up inside the container 103, the mixer is actuated and mixes the fibrous products contained in the container 103 until the animal feed is obtained.

In accordance with an advantageous aspect of the present invention, the apparatus 100 comprises at least one access device 108 hinged to the frame 104 at the driving cabin 105. The access device 108 is provided with an actuation means 109 capable of moving such an access device 108 between a first operative configuration, in which the access device 108 itself is in an opened out position, preferably protruding with respect to the frame 104, so as to be able to be used by an operator to get in and out of the driving cabin 105, and a second operative configuration, in which the access device 108 itself is in a closed up position, preferably retracted with respect to the frame 104, so as not to hinder the moving operations of the self-propelled means 101 and/or the actuation of the mobile devices mounted on board the apparatus 100, like for example the motorised desilaging device 102.

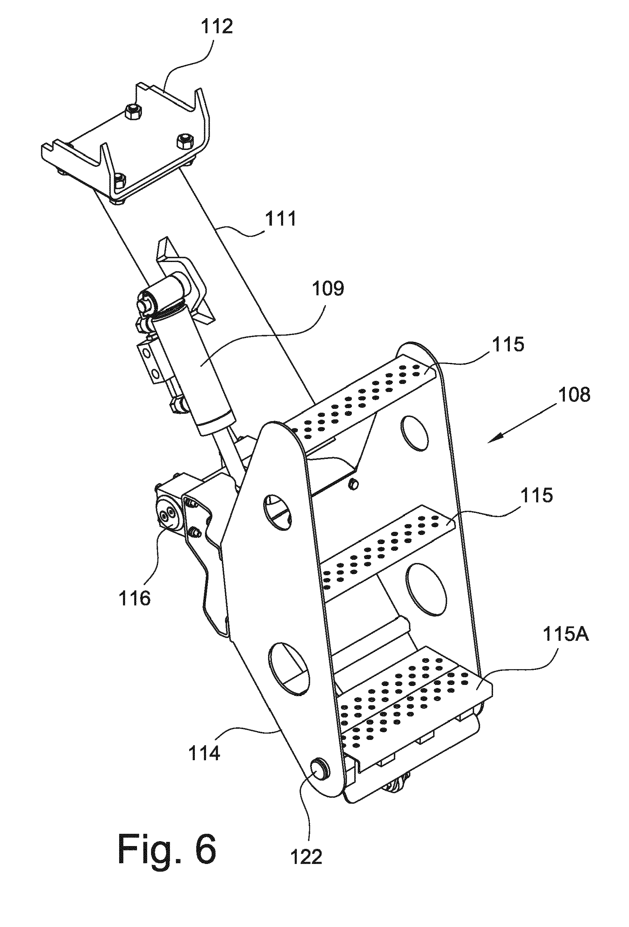

In detail, as shown in figures 6 to 9, the access device 108 is provided with a support arm 111 made integral, at a first end thereof 112, with a predetermined portion of the frame 104, typically beneath the driving cabin 105. On the second end 113 of the support arm 111 a platform 114 is hinged provided with one or more steps 115.

In the embodiment shown in the figures, the actuation means 109 consists of at least one hydraulic jack arranged between the support arm 111 and the platform 114. The hydraulic jack 109 is thus able to rotate the platform 114 about a rotation pivot 116 obtained on the second end 113 of the support arm 111. In this way the steps 115 of the platform 114 are in a substantially horizontal position, with reference to a support plane of the self-propelled means 101, in the first operative configuration of the access device 108, so that the operator can use them to get in and out of the driving cabin 105. In the second operative configuration of the access device 108 the platform 114 is, on the other hand, in a closed up position, substantially adjacent to the support arm 111. However, this does not rule out the possibility of the actuation means 109 being made in other forms, like for example a compressed air jack, an electric actuator or other means adapted for the purpose.

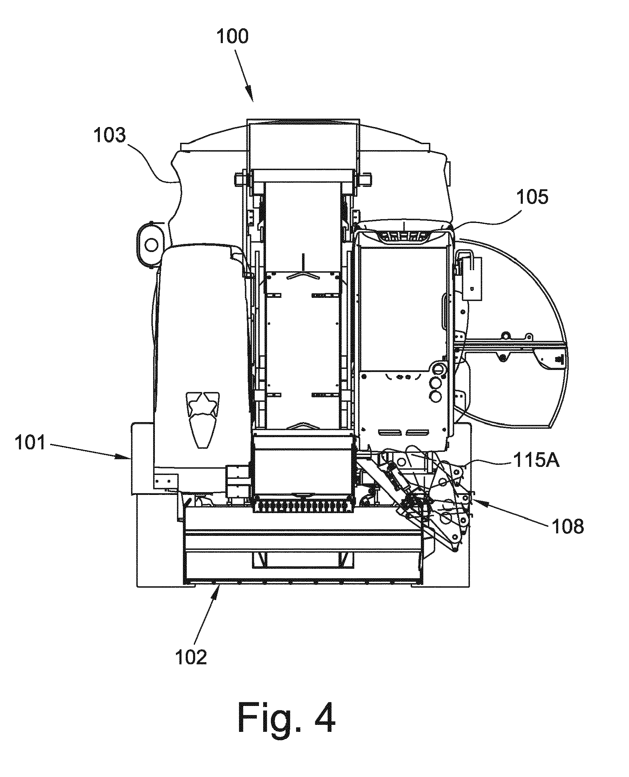

Preferably, at least one of the steps 115A of the platform 114 can be hinged to the platform 114 itself to always maintain a horizontal position, with reference to the support plane of the self-propelled means 101, in any operative configuration of the access device 108. In this way, the operator can use this specific step 115A to get in and out of the driving cabin 105 even when the access device 108 is in the closed up position and/or in a partially opened out position, as shown for example in figure 4. The rotation movement of the step 115A about its rotation pivot 122 is guided by a tie rod 117. The tie rod 117 is hinged, at an upper end thereof 118, to a support bracket 120 integral with the second end 113 of the support arm 111 and, at a lower end thereof 119, with the step 115A through the interposition of a connecting rod 121.

The actuation means 109 of the access device 108 can be controlled manually by the operator, or thanks to the help of suitable motorised mechanisms. These motorised mechanisms can be activated, for example, both from inside the driving cabin 105, and from corresponding control means arranged outside the self-propelled means 101, at the access device 108. These motorised mechanisms could also be activated automatically through one or more sensitive devices (not shown), like for example weight sensors, mounted on the access device 108 and configured for detecting the presence of an operator on the access device 108 itself. Preferably, such one or more sensitive devices could be mounted on one of the steps 115 of the platform 114, typically the rotating step 115A.

It has thus been seen that the apparatus for loading fibrous products according to the present invention achieves the purposes highlighted earlier.

The apparatus for loading fibrous products thus conceived can in any case undergo numerous modifications and variants, all of which are covered by the same innovative concept; moreover, all the details can be replaced by technically equivalent elements. In practice, the materials used, as well as the shapes and sizes, can be whatever according to the technical requirements.

The scope of protection of the invention is therefore defined by the attached claims.

## Claims

1. Apparatus (100) for loading fibrous products comprising:
- at least one motorised desilaging device (102) operatively connected to a self-propelled means (101) ;
- at least one conveyor belt;
- at least one container (103) fixed onto a frame (104) of the self-propelled means (101); and
- a driving cabin (105) that allows an operator to control the self-propelled means (101) and all the devices mounted on board the apparatus (100),
said motorised desilaging device (102) being configured for loading said fibrous products onto said conveyor belt, said conveyor belt being configured for conveying said fibrous products towards said container (103), said apparatus (100) being **characterised in that** it comprises at least one access device (108) hinged to the frame (104) at the driving cabin (105), said access device (108) being provided with an actuation means (109) capable of moving said access device (108) between a first operative configuration, in which the access device (108) is in an opened out position, so as to be able to be used by the operator to get in and out of the driving cabin (105), and a second operative configuration, in which the access device (108) is in a closed up position, so as not to hinder the moving operations of the self-propelled means (101) and/or the actuation of the mobile devices mounted on board the apparatus (100).

2. Apparatus (100) according to claim 1, **characterised in that** the access device (108) is provided with a support arm (111) made integral, at a first end thereof (112), with a predetermined portion of the frame (104).

3. Apparatus (100) according to claim 2, **characterised in that** on the second end (113) of the support arm (111) a platform (114) is hinged provided with one or more steps (115).

4. Apparatus (100) according to claim 3, **characterised in that** the actuation means (109) consists of at least one hydraulic jack interposed between the support arm (111) and the platform (114), said hydraulic jack (109) being capable of rotating the platform (114) about a rotation pivot (116) obtained on the second end (113) of the support arm (111), so that the steps (115) are in a substantially horizontal position, with reference to a support plane of the self-propelled means (101), in the first operative configuration of the access device (108), so that the operator can use said steps (115) to get in and out of the driving cabin (105), and so that in the second operative configuration of the access device (108) the platform (114) is in a closed up position, substantially adjacent to the support arm (111).

5. Apparatus (100) according to claim 4, **characterised in that** at least one of the steps (115A) is hinged to the platform (114) so as to always maintain a horizontal position, with reference to the support plane of the self-propelled means (101), in any operative configuration of the access device (108), so that the operator can use said at least one step (115A) to get in and out of the driving cabin (105) even when the access device (108) is in the closed up position and/or in a partially opened out position.

6. Apparatus (100) according to claim 5, **characterised in that** the rotation movement of said at least one step (115A) about its rotation pivot (122) is guided by a tie rod (117) hinged, at an upper end thereof (118), to a support bracket (120) integral with the second end (113) of the support arm (111) and, at a lower end thereof (119), with said at least one step (115A) through the interposition of a connecting rod (121).

7. Apparatus (100) according to any one of claims 1 to 6, **characterised in that** the actuation means (109) can be controlled manually by the operator.

8. Apparatus (100) according to any one of claims 1 to 6, **characterised in that** the actuation means (109) can be controlled through motorised mechanisms activated from inside the driving cabin (105).

9. Apparatus (100) according to any one of claims 1 to 6, **characterised in that** the actuation means (109) can be controlled through motorised mechanisms activated by corresponding control means arranged outside of the self-propelled means (101), at the access device (108).

10. Apparatus (100) according to any one of claims 1 to 6, **characterised in that** the actuation means (109) can be controlled through motorised mechanisms activated automatically through one or more sensitive devices mounted on the access device (108) and configured for detecting the presence of an operator on said access device (108).
